# EUROPÄISCHE PATENTSCHRIFT

(11) **EP 1 768 469 B1**
(45) Veröffentlichungstag und Bekanntmachung des Hinweises auf die Patenterteilung: **04.01.2012**
(21) Anmeldenummer: 06121138.9
(22) Anmeldetag: 22.09.2006
(51) Int. Cl.: H05B 41/292, H05B 41/392

(54) **Verfahren zum Betreiben einer Hochdruckentladungslampe**
Method for operating a high pressure discharge lamp
Méthode pour alimenter une lampe à décharge à haute pression

(30) Priorität: 23.09.2005 DE 10545645
(43) Veröffentlichungstag der Anmeldung: 28.03.2007
(73) Patentinhaber: Osram AG, 81536 München (DE)
(72) Erfinder: Kloss, Andreas, 85579, Neubiberg (DE)

(56) Entgegenhaltungen:
- WO-A1-03/047321
- US-A1- 2004 183 472
- US-B1- 6 225 754
- US-B1- 6 400 100

## Beschreibung

### Technisches Gebiet

Die Erfindung geht aus von einem Verfahren zum Betreiben einer Hochdruckentladungslampe gemäß dem Oberbegriff des Anspruchs 1. Es handelt sich dabei insbesondere um Metallhalogenidlampen, insbesondere für Allgemeinbeleuchtung.

### Stand der Technik

Aus der WO 03/047321 ist ein Verfahren zum Dimmen einer Hochdruckentladungslampe bekannt, insbesondere einer Metallhalogenidlampe. Damit soll die Bogenunruhe verbessert werden. Dabei wird beobachtet, dass sich ein niedriger Dimm-Level erzielen lässt, wenn die Lampe beim Dimmen statt mit Wechselstrom mit Gleichstrom betrieben wird. Je nach dem Grad des Dimmens wird dabei der kommutierende Gleichstrom (Rechteckbetrieb) beibehalten oder bei niedrigem Dimm-Level ein konstanter Gleichstrom verwendet. Diese Art der Dimmung hat den Nachteil, dass die Komponenten der Füllung zur Entmischung neigen. Eine ähnliche Anordnung ist auch aus der US 4 170 747 bekannt.

Andererseits ist es bekannt, bei Lampen mit hohem Aspektverhältnis, die mit Wechselstrom betrieben werden, eine Stabilisierung des Bogens durch gezielte Ausnützung von akustischen Resonanzen zu erreichen, siehe beispielsweise DE-A 102004004828.2 und DE-A 102004004829.0. Dimmen ist dabei nicht ausgeschlossen, jedoch hat die Praxis gezeigt, daß beim Dimmen unter Wechselstrom eine starke Schwärzung auftritt.

Die Grundzüge des Betriebs mit akustischen Resonanzen sind beispielsweise in US-B 6 400 100 beschrieben.

### Darstellung der Erfindung

Es ist Aufgabe der vorliegenden Erfindung, ein Verfahren zum Betreiben einer Hochdruckentladungslampe gemäß dem Oberbegriff des Anspruchs 1 bereitzustellen, bei dem sowohl in einem weiten Bereich gedimmt werden kann, als auch die Schwärzung des Kolbens minimiert werden kann.

Diese Aufgabe wird durch die kennzeichnenden Merkmale des Anspruchs 1 gelöst. Besonders vorteilhafte Ausgestaltungen finden sich in den abhängigen Ansprüchen.

Beim Dimmen werden Hochdruckentladungslampen im allgemeinen mit einem Strom betrieben, der deutlich niedriger als Nennstrom ist. Bislang wurde die Reduktion etwa auf 50 % des Nennstroms begrenzt. Damit geht jedoch bei niedrigem Dimm-Level eine verstärkte Freisetzung von Wolfram und somit eine schnelle Schwärzung des Entladungsgefäßes einher. Zudem wird die Entladung im Bogen zunehmend instabil und verlöscht leicht. Die Elektroden kühlen stark ab, insbesondere in der Anodenphase. Das Sputtern hat dabei seine Ursache in der Wiederaufheizung in der Kathodenphase. Dabei wird nicht nur vermehrt Wolfram freigesetzt, der niedrige Storm führt auch zu einer Einschnürung des Bogens und damit zur Bogeninstabilität.

Erfindungsgemäß wird das Abkühlen der Kathode zum einen nach wie vor dadurch verhindert, dass die Lampe bei niedrigem Dimm-Level mit konstantem Gleichstrom betrieben wird. Es hat sich gezeigt, dass die Kolbenschwärzung bei Gleichstrombetrieb zuverlässiger verhindert wird, und dass außerdem der Dimmbereich noch weiter abgesenkt werden kann, nämlich bis auf das 0,3-fache des Lampenstroms, wenn im Dimmbetrieb akustische Resonanzen verwendet werden. Durch die Verwendung von akustischen Resonanzen im Dimmbetrieb wird der Entmischung des Bogens durch den Gleichstrombetrieb und der verstärkten Auslenkung des Bogens durch Einschnürung entgegengewirkt. Prinzipiell wird beim Dimmen der Strom zurückgefahren und der Bogen dadurch dünner. Diesen ungünstigen Bedingungen wird durch die Modulation entgegengewirkt. Überraschend wird bei erfindungsgemäßem Betrieb zudem die Kolbenschwärzung verringert.

Bevorzugt wird dieser überlagerte akustisch stabilisierte Gleichstrombetrieb ohne Polaritätswechsel in einem Bereich unterhalb eines Schwellwerts, bevorzugt im Bereich 0,3 bis 0,95 des Nennstroms, angewendet, verglichen mit Wechselstrombetrieb/Rechteckbetrieb. Daher wird die Lampe bei Absenkung des Lampenstroms unter den Schwellwert mit konstantem Gleichstrom betrieben. Dieser erste Schwellwert liegt bevorzugt im Bereich 0,90 bis 0,95 des Nennstroms.

Dabei wird das Verhalten der Lampenparameter dadurch verbessert, dass einer Entmischung dadurch entgegengewirkt wird, dass die Amplitude des Gleichstroms mit der zweiten longitudinalen Eigenschwingung oder einem Mode, der darauf basiert, moduliert wird.

Der Instabilität des Bogens wird bevorzugt gleichzeitig durch eine zusätzliche Modulation des Gleichstroms entgegengewirkt. Dabei wird für diesen Zweck die zweite azimutale Eigenschwingung, oder eine Mode, die darauf basiert, herangezogen. Die beiden Arten der Modulation können beispielsweise jede für sich einzeln angewendet werden, bevorzugt werden sie gleichzeitig oder zeitlich abwechselnd (sequenziell) angewendet.

Die Modulationstiefe bzw. die Amplitude der Modulation beträgt dabei jeweils bevorzugt 0 bis 95 %, bevorzugt 10 bis 50 %, Eckwerte eingeschlossen. Sie sollte den Wert von 100 % nicht überschreiten.

Die Umschaltung des Betriebsmodus und die Steuerung der Modulation geschieht durch ein EVG. Das EVG kann insbesondere bei wiederholtem Dimmen die Polarität des Gleichstroms wechseln.

Bei Rückkehr zu voller Leistung (Nennstrom) wird die Lampe zunächst für ein bestimmtes Zeitfenster, bevorzugt mindestens 2 sec lang, im Gleichstrombetrieb bei einem zweiten Schwellwert, bevorzugt dem gleichen Schwellwert wie bei Beginn des Dimmens, insbesondere beim 0,90 bis 0,97-fachen, beispielsweise dem 0,95-fachen, Nennstrom betrieben. Danach schaltet sie wieder in den Wechselstrommodus, bevorzugt in einen Rechteckbetrieb, um .

Als Anwendungsfeld kommen Metallhalogenidlampen und Natriumhochdrucklampen in Betracht.

Bei wiederholtem Dimmen kann es vorteilhaft sein, die Polarität des Gleichstroms relativ zum letzten Dimmen zu wechseln.

Neben dem Verfahren beinhaltet die Erfindung auch elektronische Vorschaltgeräte mit Mikroprozessoren, in denen die beschriebenen Prozeduren implementiert sind. Typische dafür nötige Komponenten des EVG sind: ein Eingangsteil für die AC Netzspannung, ein Gleichrichter zum Gleichrichten der AC Netzspannung in gerichtete DC Gleichspannung, ein DC/DC Hochsetzsteller, der die gleichgerichtete DC Spannung in höhere DC Spannung umwandelt, ein Tiefsetzsteller, der die hohe DC Spannung in tiefere, für den Lampenanschluss geeignete DC Spannung umwandelt und den Lampenstrom erhöht, sowie ein Kommutator, der regelmäßig die Polarität der Gleichspannung wechselt. Der Tiefsetzsteller wirkt wie ein Konstantstromgenerator. Typische Kommutatorfrequenzen sind um die 100 Hz. Diese grundsätzliche Betriebsweise ist auch als Rechteckgleichstrombetrieb bekannt.

### Figuren

Im folgenden soll die Erfindung anhand eines Ausführungsbeispiels näher erläutert werden. Es zeigen:
- Figur 1: eine Lampe schematisiert;
- Figur 2: das Schwärzungsverhalten einer Metallhalogenidlampe in Abhängigkeit vom relativen Dimmgrad;
- Figur 3: Prinzipschaltbild eines zugehörigen EVGs

### Beschreibung einer bevorzugten Ausführungsform

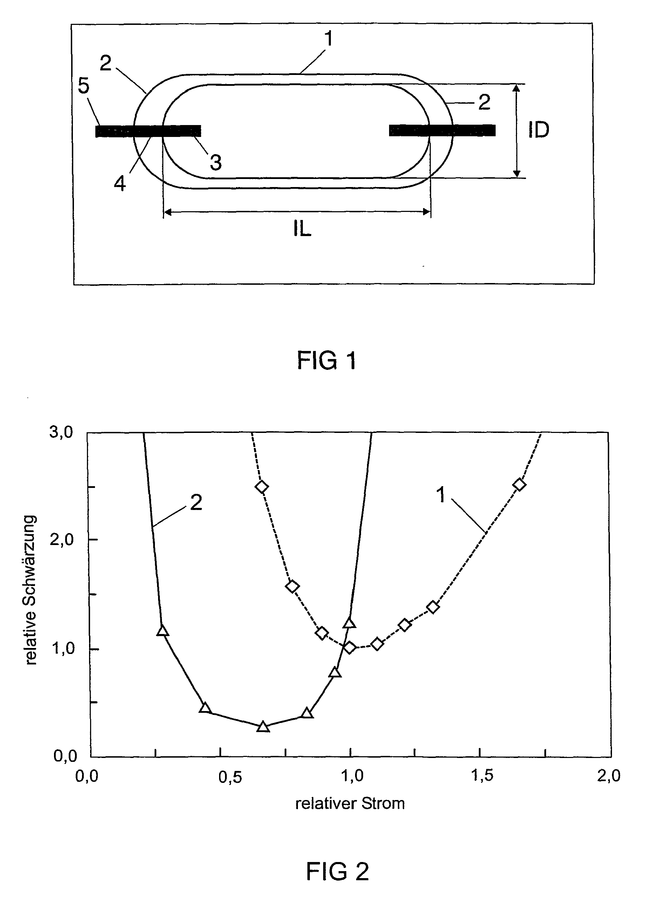

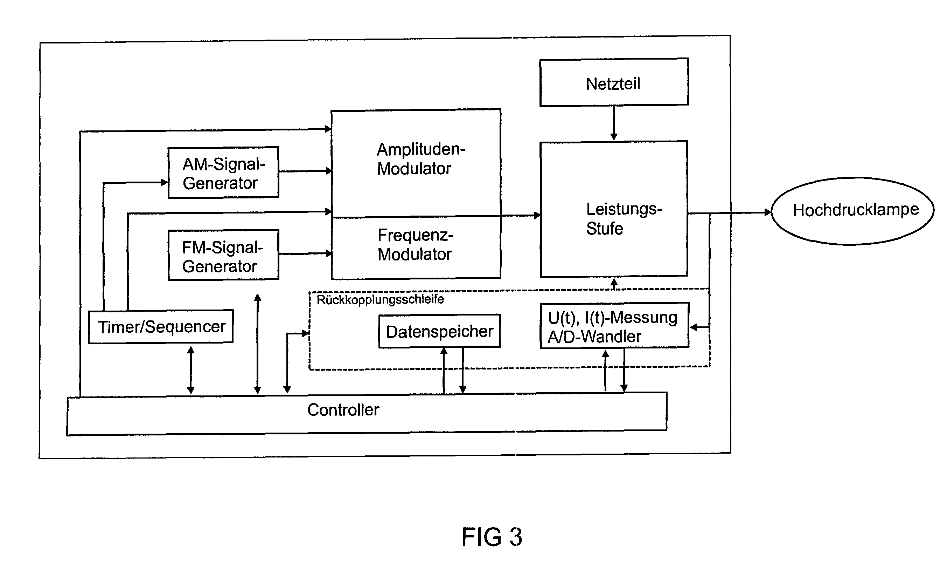

In Fig. 1 ist eine schematische Darstellung einer Hochdrucklampe gezeigt. Sie verwendet ein zylindrisches Entladungsgefäß 1 aus Quarzglas, mit einem gegebenem Innendurchmesser ID und gegebener Innenlänge IL. An den Enden 2 des Entladungsgefäßes sind Elektroden 3 angeordnet, die mittels Durchführungen 4 mit äußeren Stromzuführungen 5 verbunden sind. Das Entladungsgefäß enthält typisch eine Füllung aus Puffergas Hg mit Argon und Metallhalogeniden, beispielsweise einer Mischung aus Alkali- und Seltenerdjodiden sowie des Thallium. Die Lampe wird an einem elektronischen Vorschaltgerät, siehe Figur 3, mit Hochfrequenz in akustisch stabilisierter Resonanz betrieben. Dafür hat sich vor allem die zweite longitudinale Resonanz empfohlen. Ein Betriebsverfahren kann einen bipolaren reckteckförmigen Versorgungsstrom verwenden.

In Figur 2 ist für eine 150 W Metallhalogenidlampe das Schwärzungsverhalten gezeigt und mit konventionellem Betrieb verglichen. Die relative Schwärzung ist als Funktion des relativen Stroms aufgetragen, beides in willkürlichen Einheiten. Dabei wurde die Lampe zunähst konventionell gedimmt, mit bipolarem Sinusbetrieb (Kurve 1), und anschließend ein akustisch modulierter reiner DC-Betrieb gefahren (Kurve 2). Als Maß des Dimmgrads ist der relative Strom an der Kathode angegeben. Als Schwellwert des Dimmens wurde der 0,95-fache Lampenstrom verwendet.

In Fig. 3 ist ein Prinzipschaltbild eines zugehörigen EVGs gezeigt. Es weist folgende essentielle Komponenten auf:
Timer/Sequencer: Hier erfolgt die Zeitschema-Kontrolle zur Steuerung der Zeitdauer der Aufwärmphase und Einsetzen der Prägephase nach Zünden und Bogenübernahme der Hochdrucklampe. Hier erfolgt außerdem die Steuerung der Sweep-Rate für die Lampenbogen-Stabilisierung.
Weiterhin wird die Scan-Rate sowie Verweildauer am jeweiligen Frequenzpunkt beim Durchlaufen von Frequenz-Scans sowie die Festlegung von Pausenzeiten zwischen aufeinanderfolgenden Prozedurschritten gesteuert.
Power stage (Leistungsendstufe): Voll- oder Halbbrücke mit strombegrenzenden Elementen und typischen Frequenzgang. Sie ist über eine Versorgungsschiene (450 V DC) an das Netzteil gekoppelt.
Feed-back-Loop (Rückkopplungsschleife): Betriebserkennung der Lampe evtl. Rückkopplung von Lampenparametern wie Lampenstrom und Lampenspannung zur Einstellung der Steuerparameter und Festlegung von Aufwärm- bzw. Prägephase, bzw. Wiederholung von Prägephasen mit anderen Abstimmparametern.
Hier ist ein Schaltungsteil zur hinreichend genauen Messung von Strom und Spannung am EVG-Ausgang (Lampe) implementiert. Über diesen werden über einen A/D-Wandler die Messwerte für die Verarbeitung im Controller weiterverarbeitet. Die anfallenden Daten werden für weitere Auswertungsprozeduren in einen Daten-Speicher geschrieben.
Lampe: Hochdruck-Entladungslampe (HID lamp).
FM-Modulator: Hochleistungsfrequenzmodulator.
AM-Modulator: Analoger variabler Hochleistungsmodulator mit Möglichkeit der Kontrolle sowohl der Frequenz fAM als auch des AM-Grades AMI.
AM-Signal-Generator: Digital oder Spannungskontrollierter Oszillator.
FM-Signal Generator: Digital oder Spannungskontrollierter Oszillator.
Power Supply (Netzteil): Rail Voltage Generator.
Controller: Zentrale Kontrolle aller Einheiten.

## Patentansprüche

1. Verfahren zum Betreiben einer Hochdruckentladungslampe, insbesondere einer Metallhalogenidlampe, das zwei Elektroden und eine Füllung enthält, wobei ein Dimmbetrieb mit reduzierter Leistung **dadurch** ermöglicht wird, dass ein konstanter Geichstrombetrieb verwendet wird, wenn der Dimmgrad kleiner als ein bestimmter erster Schwellwert ist, und dass ein kommutierender Gleichstrombetrieb, insbesondere ein Rechteckbetrieb, verwendet wird, wenn der Dimmgrad höher als dieser Schwellwert ist, **dadurch gekennzeichnet, dass**, wenn der Dimmgrad kleiner als der bestimmte erste Schwellwert ist, zusammen mit dem Gleichstrombetrieb gleichzeitig eine akustische Stabilisierung vorgenommen wird, bei der die zweite longitudinale Eigenschwingung oder ein davon abgeleiteter Mode angeregt wird.

2. Verfahren nach Anspruch 1, **dadurch gekennzeichnet, dass** der erste Schwellwert beim 0,90 bis 0,97-fachen des Lampenstroms liegt.

3. Verfahren nach Anspruch 1, **dadurch gekennzeichnet, dass** die Modulationstiefe 0 bis 95 %, bevorzugt 10 bis 50 %, beträgt.

4. Verfahren nach Anspruch 1, **dadurch gekennzeichnet, dass** die Umschaltung des Betriebsmodus und die Steuerung der Modulation durch ein EVG erfolgt.

5. Verfahren nach Anspruch 1, **dadurch gekennzeichnet, dass** bei wiederholtem Dimmen die Polarität des Gleichstroms relativ zum letzten Dimmen gewechselt wird.

6. Verfahren nach Anspruch 1, **dadurch gekennzeichnet, dass** direkt vor der Rückkehr zu voller Leistung, also zum Normalbetrieb, ein kurzzeitige Phase des Betreibens im konstanten Gleichstrombetrieb bei einem zweiten Schwellwert, insbesondere beim 0,90 bis 0,97-fachen des Nennstroms, zwischengeschaltet wird.

7. Verfahren nach Anspruch 6, **dadurch gekennzeichnet, dass** der zweite Schwellwert und der erste Schwellwert gleich groß sind.

## Claims

1. Method for operating a high-pressure discharge lamp, in particular a metal halide lamp, containing two electrodes and a fill, wherein a dim operating mode at reduced power is made possible through the use of a constant direct-current operating mode when the dim level is less than a defined first threshold value, and through the use of a commutating direct-current operating mode, in particular a square-wave operating mode, when the dim level is higher than said threshold value, **characterised in that** if the dim level is less than the defined first threshold value, in conjunction with the direct-current operating mode an acoustic stabilisation is simultaneously performed in which the second longitudinal natural resonance or a mode derived therefrom is stimulated.

2. Method according to claim 1, **characterised in that** the first threshold value lies at 0.90 to 0.97 times the lamp current.

3. Method according to claim 1, **characterised in that** the modulation depth is 0 to 95 %, preferably 10 to 50 %.

4. Method according to claim 1, **characterised in that** the operating mode is switched over and the modulation controlled by means of an electronic ballast unit.

5. Method according to claim 1, **characterised in that** in the event of repeated dimming the polarity of the direct current is changed relative to the last time the lamp was dimmed.

6. Method according to claim 1, **characterised in that** a brief phase of operation in the constant direct-current operating mode at a second threshold value, in particular at 0.90 to 0.97 times the rated current, is interposed immediately prior to the return to full power, i.e. to normal operation.

7. Method according to claim 6, **characterised in that** the second threshold value and the first threshold value are equal in size.

## Revendications

1. Procédé pour faire fonctionner une lampe à décharge à haute pression, en particulier une lampe aux halogénures métalliques, comportant deux électrodes et un remplissage, dans lequel un fonctionnement avec variation de lumière à puissance réduite est rendu possible grâce au fait qu'un fonctionnement en courant continu constant est utilisé si le degré de variation est inférieur à une première valeur seuil déterminée, et qu'un fonctionnement en courant continu commutant, en particulier un fonctionnement en mode rectangulaire, est utilisé si le degré de variation est supérieur à cette valeur seuil, **caractérisé en ce que** si le degré de variation est inférieur à la première valeur seuil déterminée, il est procédé simultanément, ensemble avec le fonctionnement en courant continu, à une stabilisation acoustique lors de laquelle la seconde oscillation propre longitudinale est excitée, ou un mode déduit de celle-ci.

2. Procédé selon la revendication 1, **caractérisé en ce que** la première valeur seuil est égale à environ 0, 90 à 0,97 fois le courant de la lampe.

3. Procédé selon la revendication 1, **caractérisé en ce que** la profondeur de modulation est de 0 à 95 %, de préférence de 10 à 50 %.

4. Procédé selon la revendication 1, **caractérisé en ce que** la commutation du mode de fonctionnement et la commande de la modulation sont faites par un ballast électronique.

5. Procédé selon la revendication 1, **caractérisé en ce qu'**en cas de variation répétée, la polarité du courant continu est changée par rapport à la dernière variation.

6. Procédé selon la revendication 1, **caractérisé en ce que** juste avant le retour à la pleine puissance, donc au fonctionnement normal, une courte phase de fonctionnement en courant continu constant est intercalée, avec une seconde valeur seuil, en particulier égale à 0,90 à 0,97 fois le courant nominal.

7. Procédé selon la revendication 6, **caractérisé en ce que** la seconde valeur seuil et la première valeur seuil sont de même grandeur.
